# EUROPEAN PATENT APPLICATION

(11) **EP 2 262 219 A2**
(43) Date of publication of application: **15.12.2010**
(21) Application number: 10013046.7
(22) Date of filing: 06.11.2003
(51) Int. Cl.: H04N 1/00

(54) **Digital camera**

(30) Priority: 07.11.2002 JP 2002324351
(62) Divisional of application: 03025478.3
(71) Applicant: Panasonic Corporation, Kadoma-shi Osaka 571-8501 (JP)
(72) Inventor: Takashima, Toru, Ehime 792-0881 (JP)
(74) Representative: Grünecker, Kinkeldey, Stockmair & Schwanhäusser Anwaltssozietät

(57) **Abstract**

A digital still camera includes connection unit establishing connection with an external device; connection detection unit of detecting that the connection unit is connected to the external device and that the connection is released; an electronic viewfinder; a liquid crystal monitor allowing images to be observed from outside; first controller of shifting to a transfer mode and transmitting image data to the external device when the connection detection unit detects the connection, as well as controlling so that display of the image data is switched from the electronic viewfinder to the liquid crystal monitor.

## Description

### TITLE OF THE INVENTION

### DIGITAL STILL CAMERA, AND CONTROL METHOD AND PROGRAM OF THE SAME

### BACKGROUND OF THE INVENTION

### Field of the Invention

The present invention relates to a digital still camera, and a control method and program of the same.

### Related Art of the Invention

A digital still camera (hereinafter referred to as DSC), when used to photograph images, is set to a record mode by a mode change switch, and when used to print recorded images, the record mode is switched to a playback mode and then the digital still camera is connected to a printer or a personal computer. That is, printing of recorded images requires troublesome operations of switching the mode change switch from the record mode to a transfer mode and subsequently connecting the DSC to an external device such as a printer. There is often the case that the connection is made with the external device leaving the mode change switch unchanged, which results in failure to print, arousing user's suspicion to malfunction of the DSC and thus making it difficult to use such DSC for users. In the above case, the connection with the external device needs to be once released, followed by switchover to the transfer mode for re-connection with the external device. In order to eliminate such troublesome operations of users, recently developed is a digital still camera that is shifted to a mode for transferring data to a personal computer concurrently with the connection therewith (e.g., see Japanese Patent Application Laid-Open No. 2001-238105).

Some DSCs are equipped with an electronic viewfinder (hereinafter referred to as an EVF) which allows users to visually recognize images to be recorded or already recorded images while viewing the EVF.

Also, a digital still camera directly connectable to a printer, when connected to a printer or a personal computer, provides an indication to distinguish between the printer and the personal computer, on a liquid crystal monitor (e.g. , see Japanese Patent Application Laid-Open No. 10-224719).

Furthermore, a DSC can display on the liquid crystal monitor, error information of a recordingmaterial in a printer if receiving that information (e.g., see Japanese Patent Application Laid-Open No. 10-229534).

Moreover, a DSC includes a memory card removable from the DSC body as a medium for storing recorded images, and is provided also with an openable/closable door at an insertion port of this memory card. This memory card records the recorded images and DPOF (Digital Print Order Format) data. For exchange of the memory card, a finished memory card is removed from the insertion port and a new memory card is inserted therein.

Furthermore, the memory card may be used as external storage by connecting the DSC with a personal computer, in which case image data is transferred from the personal computer to the memory card, and access information is displayed on display unit during the transfer to the memory card (e.g., see Japanese Patent Application Laid-Open No. 2001-211356). The disclosures of Japanese Patent Application Laid-Open No. 10-224719, Japanese Patent Application Laid-Open No. 10-229534, and Japanese Patent Application Laid-Open No. 2001-211356 are incorported herein by reference in their entireties.

When a user connects the DSC to the external device during photographing using a finder, he/she needs to perform some operations for data transfer in accordance with instructions displayed in the finder even when the record mode is switched to the transfer mode for preparation of data transfer to the external device. Such operations are burdensome for users.

Also, when connection is made with a printer or the like in a mode in which the EVF is active, users have difficulty in viewing print images and information displayed in the EVF in sequential printing, and when attempting to display the images and the like on the liquid crystal monitor, users have to change the mode to a liquid crystal monitor display mode, which is an inconvenient operation.

Furthermore, when the DSC is connected to a printer or a personal computer, the connection needs to be confirmed on the liquid crystal monitor and thereafter printing conditions and the like are to be set in the printer or personal computer, which is a troublesome operation.

Furthermore, an error and the like in the printer are displayed on the liquid crystal monitor, therefore users can recognize a print status. However there is still difficulty in recognizing which one of images in a printing process is involved in the error and the like. Particularly, images printed in a DPOF mode are automatically printed out according to the setting, but the print status is hardly recognizable by users. This means that users cannot recognize an image being currently printed, the number of printed sheets out of the total directive number of sheets to be printed, or the like. Also, a printer placed far from the DSC and a user causes inconvenience to the user.

Moreover, the memory card may be used with the door of a storage part opened, which may cause the failure in data transfer when the memory card is removed mistakenly during access of signals to the memory card.

In addition, the memory card inserted during communication with the external device such as a printer is not accessible. Therefore in order to transfer images from the exchanged memory card, a connection cable is once released from the connection and is again connected with the external device, which requires time disadvantageously.

Furthermore, when the DSC memory card is used as an external storage of a personal computer, image data directed from the personal computer to the DSC is transmitted by a data block, that is, discretely timed data blocks are transferred. In this case, during transfer of one data block, the DSC provides an indication of data writing as access information, whereas in an interval between the completion of the one data block transfer and the next data block transfer, that is, while an FAT is being written (approximately 10 to 20 seconds), the DSC does not provide the above indication. Therefore, there are some cases that users misconceive the data transfer to be done and thus release the connection between the DSC and the personal computer, leading to damages not only to image data but also to the memory card itself.

It is, therefore, an object of the present invention to provide a DSC which exhibits better operability when connected to an external device, and a program of the DSC.

It is another object of the present invention to provide a DSC capable of reducing operations performed on the external device when the DSC is connected thereto, and a program of the DSC.

It is still another object of the present invention to provide a DSC capable of providing an indication of the progress of printing on a printer in a batch print mode such as a DPOF mode, and a program of the DSC.

It is still yet another object of the present invention to provide a DSC with lower possibility that connection with a personal computer is mistakenly released when discretely timed data blocks are transferred from the personal computer, and a program of the DSC.

### SUMMARY OF THE INVENTION

The 1^{st} aspect of the present invention is a digital still camera comprising:
connection unit establishing connection with an external device;
connection detection unit detecting that the connection unit is connected to the external device and that the connection is released;
an electronic viewfinder allowing a user to view therethrough images to be recorded or already recorded images;
a display device allowing the images to be recorded or the already recorded images to be observed from outside; and
first controller having a plurality of modes including a transfer mode, the first controller shifting to the transfer mode and transmitting image data to the external device when the connection detection unit detects the connection, as well as controlling so that display of the image data is switched from the electronic viewfinder to the display device.

The 2^{nd} aspect of the present invention is the digital still camera according to the 1^{st} aspect of the present invention, wherein the connection with the external device is established via a USB cable.

The 3^{rd} aspect of the present invention is the digital still camera according to the 1^{st} aspect of the present invention, wherein the external device includes a printer.

The 4^{th} aspect of the present invention is a program for operating a computer as the first controller of the digital still camera according to the 1^{st} aspect of the present invention.

The 5^{th} aspect of the present invention is a digital still camera comprising:
a display device operable to display image data or textual information;
connection unit establishing connection with an external device;
external device distinction unit distinguishing a type of the external device connected to the connection unit; and
second controller, in accordance with the type of the external device distinguished by the external device distinction unit, providing on the display device an indication that the connection is established with the distinguished external device and an indication for inputting data required in a communication with the distinguished external device.

The 6^{th} aspect of the present invention is the digital still camera according to the 5^{th} aspect of the present invention, wherein the external device distinction unit distinguishes the type of the external device connected to the connection unit by distinguishing a device code transmitted from the external device.

The 7^{th} aspect of the present invention is the digital still camera according to the 6^{th} aspect of the present invention, wherein
the external device distinction unit distinguishes between a printer and a personal computer which are the external device connected to the connection unit, and
the second controller shifts to a mode for transmitting image data to the printer when the external device distinction unit receives a printer code, and shifts to a mode for transmitting image data to the personal computer when the external device distinction unit receives a code indicating the personal computer.

The 8^{th} aspect of the present invention is the digital still camera according to the 6^{th} aspect of the present invention, wherein, when the external device distinction unit does not receive the device code while the connection unit is being connected to the external device, the second controller shifts to a mode for changing internal setting parameters.

The 9^{th} aspect of the present invention is a program for operating a computer as the second controller of the digital still camera according to the 5^{th} aspect of the present invention.

The 10^{th} aspect of the present invention is a digital still camera comprising:
connection unit establishing connection with an external device;
storage unit storing recorded images or information related to the recorded images;
a display device operable to display the recorded images or textual information; and
third controller having a batch print mode for collectively transmitting at least a part of the recorded images to a printer connected to the connection unit so that the printer prints the transmitted images, wherein
in accordance with individual image print start information or error information transmitted from the printer, the third controller retrieves an image corresponding to the individual image print start information or error information or the information related to the image from the storage unit to thereby display on the display device.

The 11^{th} aspect of the present invention is the digital still camera according to the 10^{th} aspect of the present invention, wherein the information related to the image indicates a printing progress state of the printer.

The 12^{th} aspect of the present invention is a program for operating a computer as the third controller of the digital still camera according to the 10^{th} aspect of the present invention.

The 13^{th} aspect of the present invention is a digital still camera comprising:
a main body;
a display device operable to display textual information or image data;
sixth controller, when image data is transferred by transmission of a plurality of discretely timed data blocks from a connected personal computer or when image data is transferred by transmission of a plurality of discretely timed data blocks to a connected personal computer, providing continuously from start to completion of the image data transfer on the display device, an indication that the image data transfer is in progress.

The 14^{th} aspect of the present invention is the digital still camera according to the 13^{th} aspect of the present invention, wherein
the main body is removably attachable with portable storage unit, and
the sixth controller determines the completion of image data transfer on condition that next data block is not transferred for a predetermined period of time since one data block transfer has completed or that a signal indicating permission to detach the portable storage unit from the main body is received from the personal computer.

The 15^{th} aspect of the present invention is the digital still camera according to the 14^{th} aspect of the present invention, wherein the sixth controller does not determine the completion of the image data transfer, while each data block is being transferred or the portable storage unit for storing image data or textual information is being accessed.

The 16^{th} aspect of the present invention is a method of controlling a digital still camera comprising:
a connection detecting step of detecting that connection unit establishing connection with an external device is connected to the external device or that the connection is released;
a step of shifting from a plurality of modes to a transfer mode when the connection is detected in the connection detecting step;
a step of transmitting image data to the external device after the shift to the transfer mode; and
a step of transmitting the image data and simultaneously effecting control such that display of the image data is switched from an electronic viewfinder to a display device, the electronic viewfinder allowing a user to view therethrough images to be recorded or already recorded images, the display device allowing the images to be recorded or the already recorded images to be observed from outside.

According to the present invention, a DSC which exhibits better operability when connected to an external device, and a program of the DSC can be provided.

Also, according to the present invention, a DSC capable of reducing operations performed on the external device when the DSC is connected thereto, and a program of the DSC, can be provided.

Furthermore, according to the present invention, a DSC capable of providing an indication of the progress of printing on a printer in a batch print mode such as a DPOF mode, and a program of the DSC, can be provided.

Moreover, according to the present invention, a DSC with lower possibility that connection with a personal computer is mistakenly released when discretely timed data blocks are transferred from the personal computer, and a program of the DSC, can be provided.

### BRIEF DESCRIPTION OF THE DRAWINGS

FIG. 1 is a schematic diagram showing a state that a DSC of the present invention is used;
FIG. 2 is a perspective view of the DSC according to the present invention;
FIG. 3 is a block diagram showing a constitution of the DSC according to a first embodiment of the present invention;
FIG. 4 (a) is a flowchart of an operation of the DSC according to the first embodiment of the present invention;
FIG. 4 (b) is a flowchart of an operation of the DSC according to the first embodiment of the present invention;
FIG. 5 is a circuit diagram partly showing a configuration of first controller of the DSC according to the first embodiment of the present invention;
FIG. 6 is a block diagram partly showing a configuration of the DSC according to the present invention;
FIG. 7 is a block diagram showing a constitution of the DSC according to a second embodiment of the present invention;
FIG. 8 is a flowchart of an operation of the DSC according to the second embodiment of the present invention;
FIG. 9 is a block diagram showing a constitution of the DSC according to a third embodiment of the present invention;
FIG. 10 is a flowchart of an operation of the DSC according to the third embodiment of the present invention;
FIG. 11 (a) is a diagram exemplarily showing screen display provided on display unit in the operation of the DSC according to the third embodiment of the present invention;
FIG. 11 (b) is a diagram exemplarily showing screen display provided on the display unit in the operation of the DSC according to the third embodiment of the present invention;
FIG. 11 (c) is a diagram exemplarily showing screen display provided on the display unit in the operation of the DSC according to the third embodiment of the present invention;
FIG. 12 is a block diagram showing a constitution of the DSC according to a fourth embodiment of the present invention;
FIG. 13 is a perspective view schematically showing a bottom face of the DSC according to the fourth embodiment of the present invention;
FIG. 14 is a flowchart of an operation of the DSC according to the fourth embodiment of the present invention;
FIG. 15 is a block diagram showing a constitution of the DSC according to a fifth embodiment of the present invention;
FIG. 16 is a flowchart of an operation of the DSC according to the fifth embodiment of the present invention;
FIG. 17 is a block diagram showing a constitution of the DSC according to a sixth embodiment of the present invention; and
FIG. 18 is a flowchart of an operation of the DSC according to the sixth embodiment of the present invention.

### Description of Symbols

1 Main body
2 Printer
3 USB cable
4 USB terminal insertion port
5 USB terminal

### PREFERRED EMBODIMENTS OF THE INVENTION

### (First Embodiment)

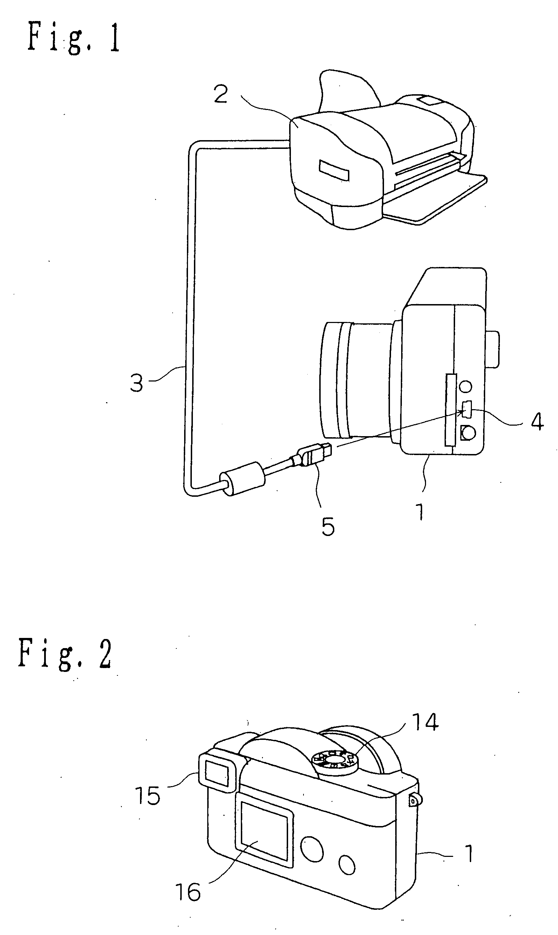

A digital still camera (hereinafter, referred to as a DSC) according to a first embodiment of the present invention is described below with reference to the drawings. FIG. 1 is a perspective view showing a state that the DSC is used in the first embodiment of the present invention. A main body 1 of the DSC has a USB terminal insertion port 4 which is one example of connection unit of the present invention and which a USB terminal 5 is inserted into, so that the main body 1 is connected via a USB cable 3 with a printer 2 which is one example of an external device of the present invention. The USB terminal insertion port 4 is connected with connection detection unit (not shown), which allows the DSC in the present invention to detect the connection established with the printer 2 when the USB terminal 5 is inserted into the USB terminal insertion port 4.

FIG. 2 shows a rear perspective view of the DSC in the first embodiment. In an upper part of the main body 1, there is provided with a mode dial 14 for switching to a plurality of various modes such as a record mode and playback mode, which is one example of mode selection unit of the present invention. On the rear side of the main body 1 are equipped with an EVF 15 through which images to be recorded or already recorded images can be viewed, and a liquid crystal monitor 16 which allows those images to be observed from the outside and which is one example of a display device of the present invention.

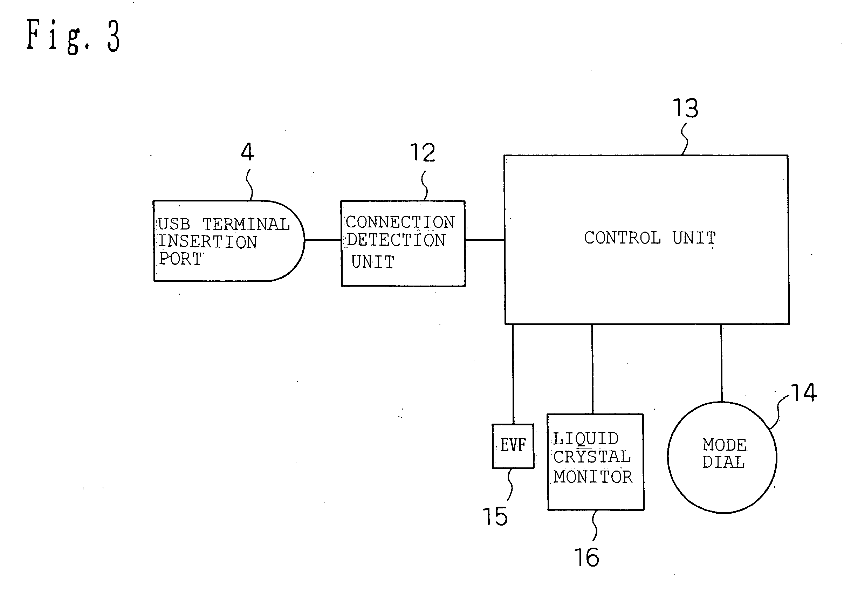

FIG. 3 is a block diagram showing a constitution of the DSC in the first embodiment. A control unit 13, which is one example of first controller of the present invention, is connected with connection detection unit 12, the USB terminal insertion port 4, the mode dial 14, the EVF 15 and the liquid crystal monitor 16. The connection detection unit 12 has a capability of detecting a connection state or a connection released state with a printer 2 connected to the USB terminal insertion port 4 by detecting a voltage applied from the printer 2. The control unit 13 has various types of modes such as a record mode and playback mode, and is operable to switch eachmode and transmit image data to the printer 2 when connected thereto.

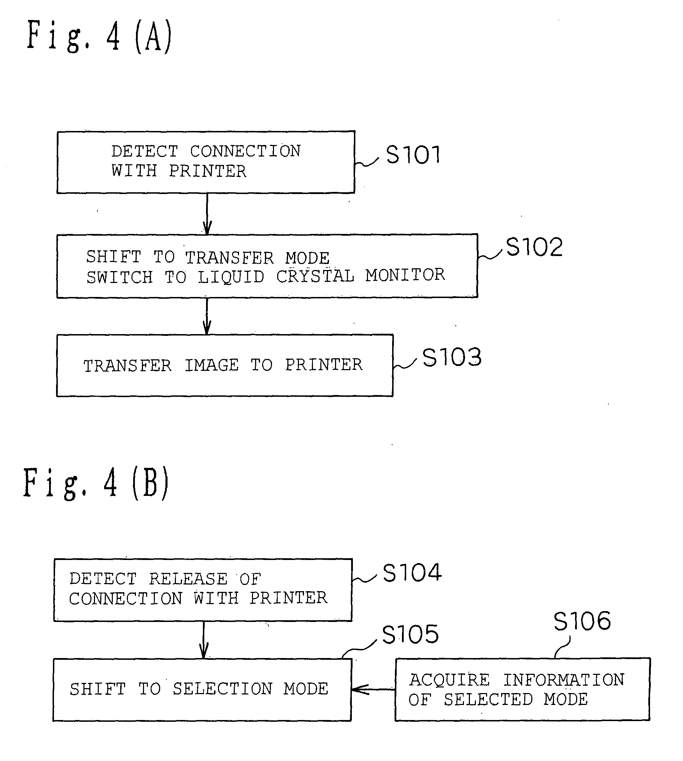

Next, an operation of the DSC having the above constitution in this embodiment will be described along the flowcharts shown in FIGS. 4(a) and 4(b). When the USB terminal 5 of the USB cable 3 connected to the printer 2 is inserted to the USB terminal insertion port 4, the connection detection unit 12 detects a voltage applied from the printer 2 and thereby detects that the DSC is being connected with the printer 2 (step S101). Data obtained from the connection detection unit 12 is transmitted to the control unit 13 which then switches from a mode set by the mode dial 14 to the transfer mode (step S102) .

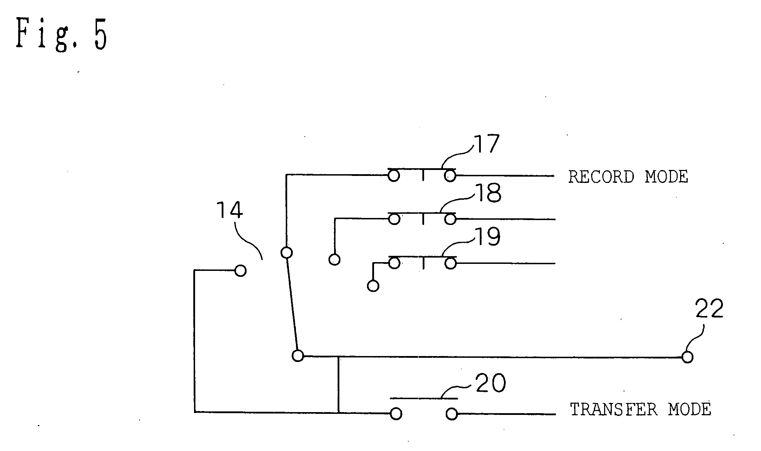

FIG. 5 is a diagram showing a switching operation to the transfer mode in the control unit 13. The mode dial 14 is a switch allowing the selection among various modes such as the recordmode, playbackmode and transfermode. The terminal 22 is operable to transmit signals from the selected mode. Contacts 17, 18, and 19 represent b-contact switches, and a contact 20 represents an a-contact switch. The contacts 17, 18 and 19 operate together with the contact 20. Now assuming that the record mode is selected, the contact 17 is closed while the contact 20 is opened, and a record mode line is connected to the terminal 22 via the contact 17 and the mode dial 14.

Upon receipt of information from the connection detection unit 12 indicating that the connection is established with the external device, the control unit 13 opens the contact 17 and closes the contact 20. Through this operation, the control unit 13 opens the record mode line to connect the transfer mode line to the terminal 22 even when the mode dial 14 is set to the record mode.

When ascertaining that the terminal 22 is connected to the transfer mode line, the control unit 13 shifts from the record mode to the transfer mode, followed by the control for transmitting image data to the printer 2 (step S103).

Accordingly, when the DSC in the first embodiment is connected to the printer 2 with the mode dial 14 being on the record mode, the internal control unit 13 can switch a mode from the record mode to the transfer mode, which allows users to transmit images to the printer 2 even when they forget to change the setting of the mode dial 14, so that an easy-to-use DSC can be provided.

The above description has dealt with the case that the external device of the present invention is the printer 2, however, it may alternatively be a personal computer, a portable telephone or other devices.

Also, it is described that the connection detection unit of the present invention has the capability of detecting a connection state with the external device such as the printer 2 connected to the USB terminal insertion port 4 by detecting the voltage applied from the external device, however, the connection detection unit of the present invention may take any constitution enabling the detection of connection with the external device by means of techniques other than the above, such as a constitution in which the connection of the cable induces opening/closing of the contacts.

Furthermore, according to the above description, even when the mode dial 14 is set to the record mode, it is automatically switched to the transfer mode upon the detection of connection established with the external device, however, the mode dial 14 even set to other modes is also switched to the transfer mode when connection with the external device is detected.

Moreover, the constitution and operation have been described in which the connection detection unit of the present invention detects that the connection is established with the external device, followed by automatic shifting from the mode set by the mode dial 14 to the transfer mode, however, there are another conceivable constitution and operation such that the connection detection unit detects a release of the connection with the external device when the connection is released therefrom.

In this case, as shown in FIG. 4 (b), it may only be constituted so as to automatically return to the mode previously set by the mode dial 14 (step S105) after the detection of release of connection with the external device by the connection detection unit 12 (step S104). For example, in the circuit shown in FIG. 5, when the mode dial 14 is originally set to the record mode (step S106), the contact 20 is opened and the contact 17 is closed in response to the detection of release of connection with the external device by the connection detection unit 12, and thereby the record mode line is connected to the terminal 22 in place of the transfer mode. Therefore, while the connection detection unit 22 are detecting that the connection is being established with the external device, the control unit 13 operates in the transfer mode whichever mode is selected by the mode dial 14, whereas when the connection detection unit 12 detects that the connection with the external device is released, the control unit 13 operates in a mode being set by the mode dial 14 at that point. This means that the mode dial 14 is changeable while the connection is being established with the external device, allowing users to select beforehand a mode to be used after releasing the connection from the external device.

When the recorded image is displayed in the EVF, the control unit 13 may switch such image display from the EVF to the liquid crystal monitor 16 which is one example of display unit of the present invention (step S102). This allows users to confirm images to be transmitted to the external device on the liquid crystal monitor screen without looking into the EVF, so that further easy-to-use DSC can be provided.

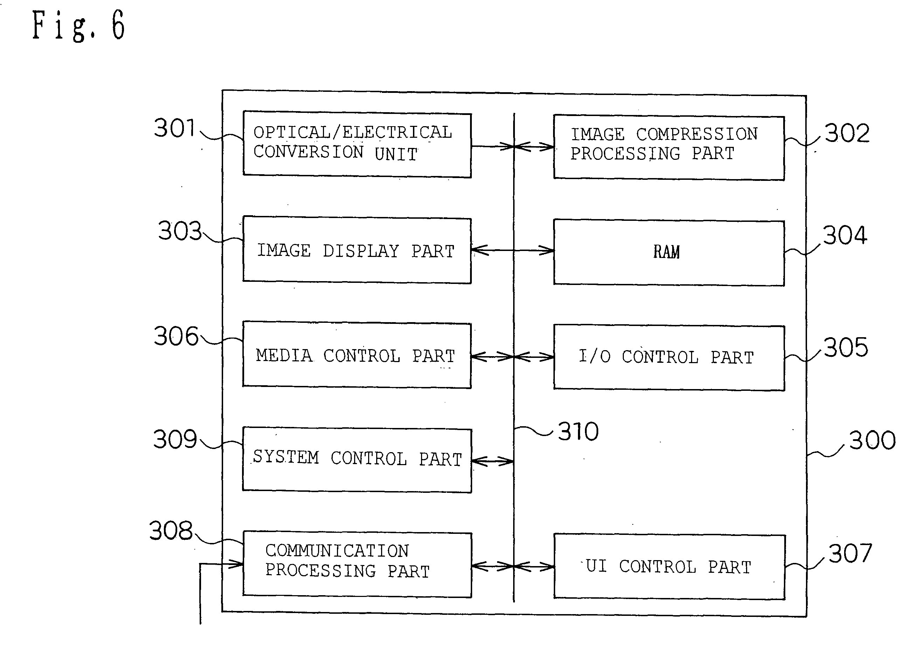

FIG. 6 is a block diagram showing a general configuration of the DSC. Note here that the control unit 13 may comprise a UI control part 307 operable to recognize the mode switchover of the mode dial 14, a system control part 309 for controlling the entire operation of the DSC, such as processing for mode setting, which are shown as an example in FIG. 5, and that the connection detection unit 12 may comprise, for example, an I/O control part 305, or the like.

Although a part of the control unit 13 comprises the circuits shown in FIG. 5 according to the above description, any circuit other than that shown in FIG. 5 is also allowable if it is operable in the same manner, and the control unit 13 may be composed on a software basis, not composed of hardware circuits.

Also, the above description is about the constitution in which the control unit 13 switches to the transfer mode when the USB terminal 5 is inserted into the USB terminal insertion port 4, however, it is also allowable to constitute so that the control unit 13 further has a playback mode whereby it switches to the playback mode when the USB terminal 5 is inserted into the USB terminal insertion port 4. Note here that the playback mode refers to an operation mode used to display recorded image data. In this case, the transfer mode of the present invention corresponds to an integrated mode combining the transfer mode and the playback mode together as a single operation mode. Or alternatively, the transfer mode of the present invention may be a mode combining the transfer mode and the recordmode together as a single operation mode.

### (Second Embodiment)

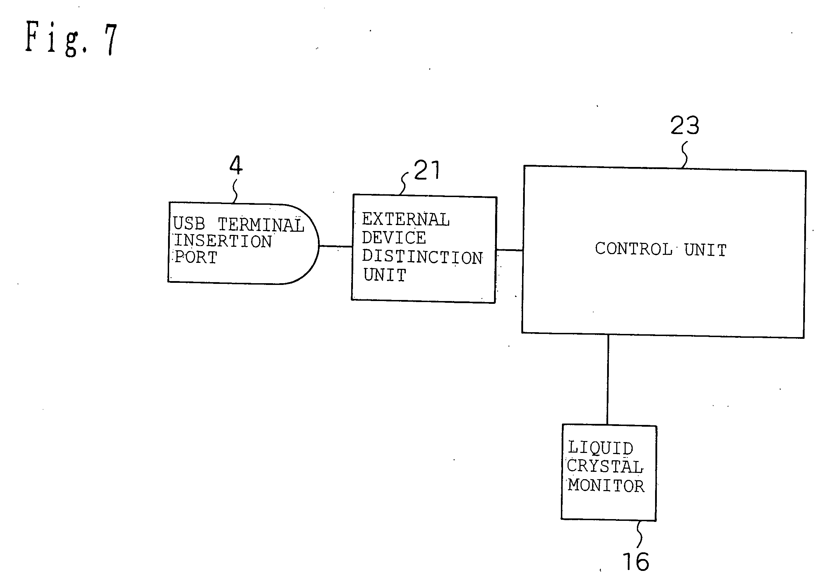

FIG. 7 is a block diagram showing a constitution of the DSC according to a second embodiment of the present invention. The same reference numerals are allocated to the same components as those in the first embodiment, and the description thereof will be omitted.

Connected to the USB terminal insertion port 4 is an external device distinction unit 21 capable of determining the external device connected via the USB terminal insertion port 4, which is an example of external device distinction unit of the present invention, and the external device distinction unit 21 is connected to a control unit 23 which is an example of second controller of the present invention. The control unit 23 is connected to the liquid crystal monitor 16.

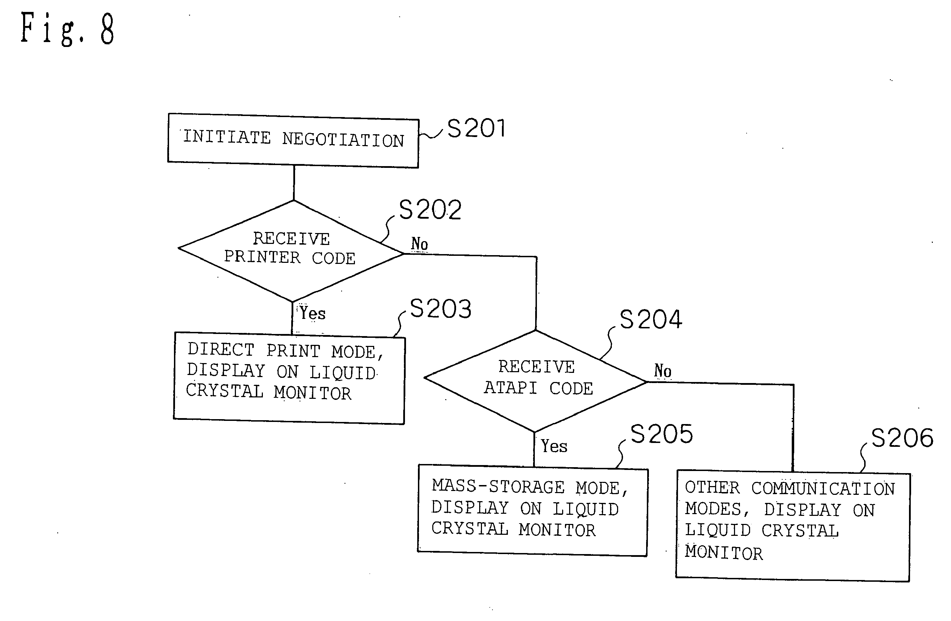

Next, an operation of the DSC having the above constitution will be described referring to FIG. 8. The control unit 23 starts negotiation with the external device in a state where the USB cable 3 is connected to the USB terminal insertion port 4 (step S201), and the external device distinction unit 21 determines whether it is receiving a printer code, which is an example of a device code of the present invention (step S202). When the external device distinction unit 21 determines that it is receiving the printer code, the control unit 23 shifts to a direct print mode for transmitting image data to the printer 2, and provides an indication of this fact on the liquid crystal monitor 16 (step S203). At this time, the liquid crystal monitor 16 displays, for example, items necessary to respond to a request from the printer 2. This allows a user to select the item displayed on the liquid crystal monitor 16, whereby print conditions and the like basically required by the printer 2 can be set via the liquid crystal monitor 16 of the DSC.

When determining that it is not receiving the printer code, the external device distinction unit 21 also determines whether it is receiving an ATAPI code from a personal computer, which is another example of the device code of the present invention (step S204). When the external device distinction unit 21 determines that it is receiving the ATAPI code from the personal computer, the control unit 23 shifts to a mass storage mode for transmitting image data to the personal computer and provides an indication of this fact on the liquid crystal monitor 16 (step S205). The liquid crystal monitor 16 displays, for example, that the printer is controllable by the DSC via the personal computer. This allows a user to select the item displayed on the liquid crystal monitor 16, whereby print conditions and the like basically required by the personal computer can be set via the liquid crystal monitor 16 of the DSC.

When the external device distinction unit 21 determines that it is receiving neither the printer code nor ATAPI code even though the USB cable 3 is connected to the USB terminal insertion port 4, the control unit 23 shifts to other communication modes and provides an indication of this fact on the liquid crystal monitor 16 (step S206). In other communication modes, it is possible to set internal parameters during manufacture of the products, or to modify the set parameters in repairing the products.

As described above, the DSC in this embodiment is easy to use as the connected external device is displayed on the liquid crystal monitor 16, making it possible for users to recognize the connected external device easily.

The external device distinction unit 21 in this embodiment comprises, for example, a communication processing part 308, the I/O control part 305, and the like, both of which are shown in FIG. 6, and the control unit 23 can be realized by comprising the system control part 309 and the like, also shown in FIG. 6.

Also, while the above description of this embodiment has dealt with the case that the device code of the present invention is the printer code or the ATAPI code, any code may be allowable if it is distinguishable by the external device distinction unit 21.

Furthermore, it is also allowable to constitute the external device distinction unit of the present invention so as to recognize the connected external device by a voltage signal, a contact signal or other signals, not by the device code of the present invention, in which case the same effect can be obtained.

Moreover, the external device of the present invention is a printer or a personal computer according to the above description, however, it may alternatively be a portable telephone or other devices. In this case, the same effect as the above can be offered if the external device distinction unit is able to distinguish those other devices.

### (Third Embodiment)

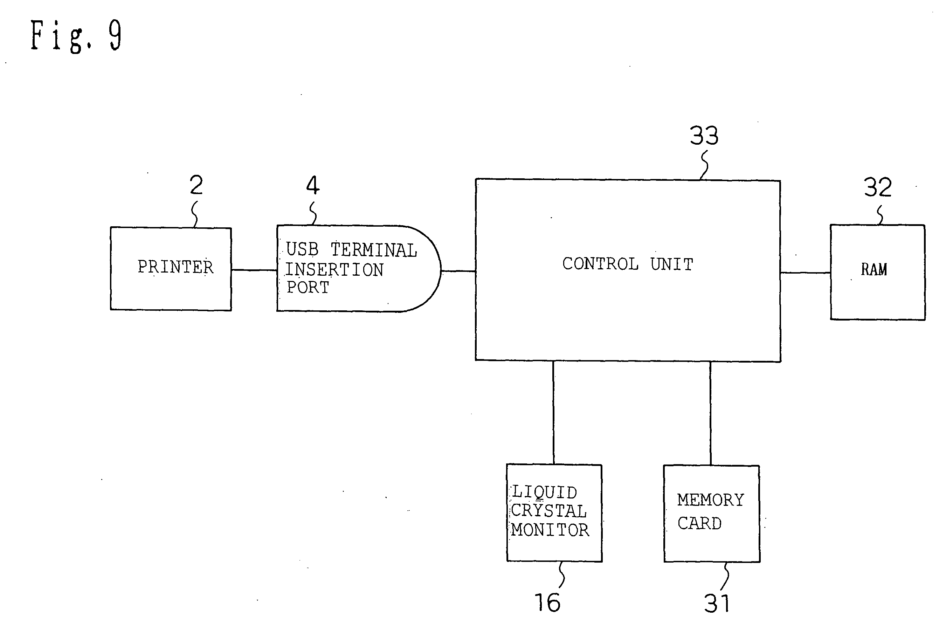

FIG. 9 is a block diagram showing a constitution of the DSC according to a third embodiment, wherein the same reference numerals are allocated to the same components as those in the first and second embodiments, and the descriptions thereof will be omitted.

The DSC in the third embodiment has a control unit 33 which is an example of third controller of the present invention, connected to the USB terminal insertion port 4, and which is connected to the liquid crystal monitor 16, a memory 32 which is an example of storage unit of the present invention, and a memory card 31. The USB terminal insertion port 4 is connected to the printer 2 as an external device. The control unit 33 has a DPOF mode for transmitting a part or all of recorded images collectively to the printer 2 and printing the images from the printer 2, which is an example of a batch print mode of the present invention. The DPOF mode can be set by selecting it using the mode dial 14 and the like. The DPOF permits batch printing of only desired images from among the recorded images. The data of selected images is stored in the memory card 31 as DPOF files.

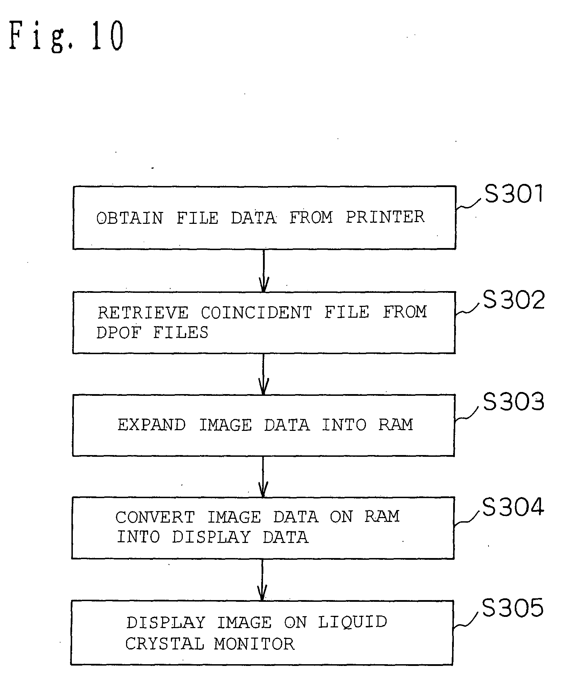

Next, an operation of the DSC having the above constitution in this embodiment will be described referring to FIG. 10. When the images transmitted from the DSC to the printer 2 starts to be printed in the DPOF mode selected by the mode dial 14 in the control unit 33, the printer 2 transmits data of the printing image to the control unit 33 of the DSC. The control unit 33 obtains file data which is an example of print start information of the present invention (step S301), and retrieves the relevant information from the DPOF files stored in the memory card 31 (step S302). Then, the control unit 33 expands the image data retrieved from the DPOF files into a RAM 32 (step S303), and converts the image data on the RAM 32 into data for displaying(step S304). Subsequently, the control unit 33 provides the converted image data on the liquid crystal monitor 16 (step S305).

Through the operations as the above, a user can recognize an image being currently printed by the printer 2 via the liquid crystal monitor 16 of the DSC, which means that the printing image is easily recognizable even in the case where the printer 2 is located apart from the DSC.

The control unit 33 may obtain, for every image, print completion information as well as the print start information, to thereby provide on the liquid crystal monitor 16 the display data corresponding to each image data, which is an example of information related to images in the present invention. In this case, since the control unit 33 can determine based on the print completion information that the relevant image has been printed properly, the control unit 33 stores such information onto the RAM, thereby allowing users to confirm a list of the properly printed images viewing the liquid crystal monitor 16.

Alternatively, the control unit 33 may obtain, instead of the print completion information, error information of an image which was not properly printed. This enables users to confirm a list of the images not properly printed by viewing the liquid crystal monitor 16.

When only a part of an image is printed due to a print error such as paper jamming, it has heretofore been difficult to specify the image involved in the error even when the printer 2 is located in the vicinity of the DSC. However the operations described above allows users to instantly recognize which image is properly printed out and which image is involved in error. When such an error occurs, a user has only to again select an image failed in printing in the DPOF mode and submits a print instruction for the image.

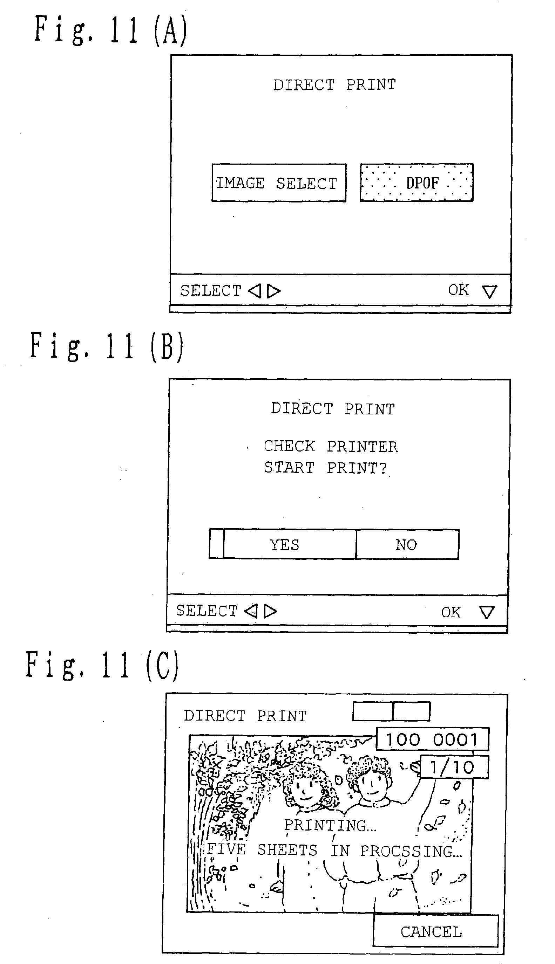

Although the liquid crystal monitor 16 displays the display data converted from the image data according to the above description, the display data may be data obtained by reducing the number of bits in the image data, or textual information corresponding to the image data, such as the number of printed sheets out of the total number of sheets to be printed out, or may include both of them. For example, FIG. 11 shows one example of a screen of the liquid crystal monitor on which both the image data under the printing processing and the textual information are displayed. FIG. 11 (a) is an example of a screen for selecting either an image selective mode in which an image to be printed can be chosen one by one, or the DPOF mode, FIG. 11 (b) is an example of a screen for confirming the start of printing, and FIG. 11 (c) is an example of a screen on which an image under the printing processing is displayed and also which indicates that five sheets remain to be printed out of images designated in the DPOF mode.

Furthermore, while the storage unit of the present invention is the memory card 31 according to the present invention, any storage unit is available if it is able to store the image data and DPOF setting data.

Moreover, the batch print mode of the present invention is the DPOF mode according to the above description in this embodiment, however, any mode is allowable if it supports batch processing which permits batch printing of a part or all of the recorded images.

In addition, the control 33 may comprise, with reference to the configuration in FIG. 6, an image compression part 302, a media control part 306 for controlling input/output of data to/from the memory card 31, the system control part 309, the communication processing part 308, the I/O control part 305, and the like, for example.

### (Fourth Embodiment)

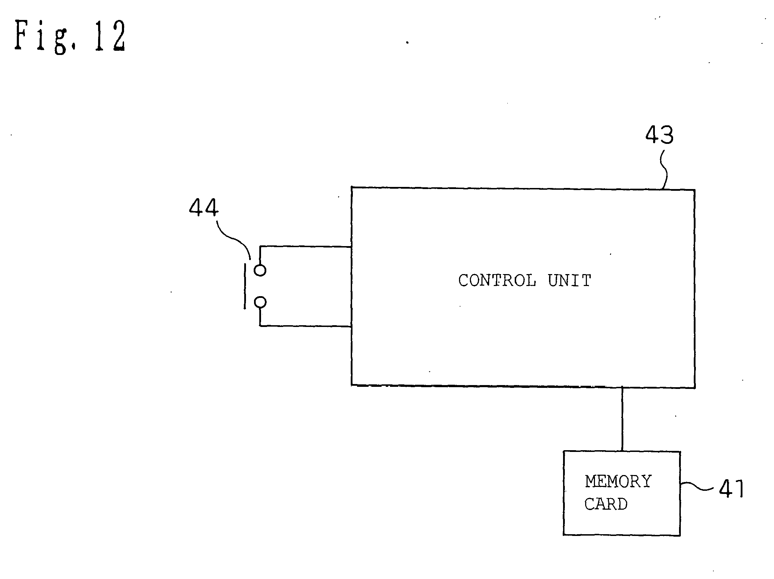

FIG. 12 is a block diagram showing a constitution of the DSC according to a fourth embodiment of the present invention. In this embodiment, the same reference numerals are allocated to the same components as those in the first to third embodiments, and the descriptions thereof will be omitted.

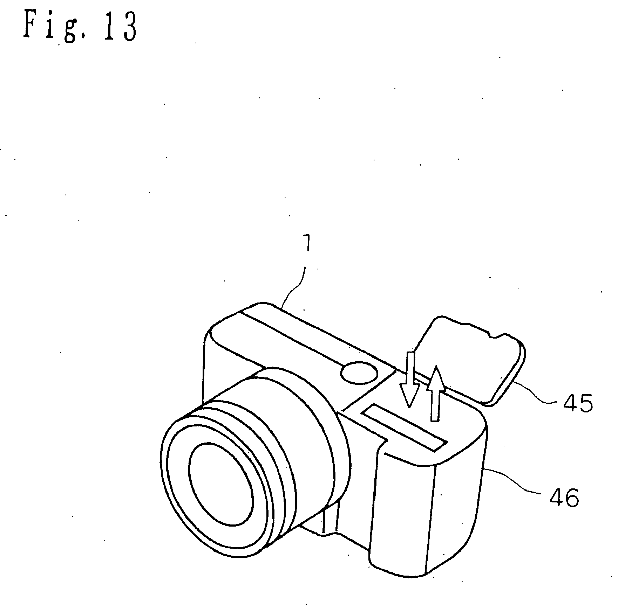

The DSC in the fourth embodiment has a control unit 43 which is an example of fifth controller of the present invention, and the control unit 43 is connected to a memory card 41 removably attached to the main body 1, which is one example of portable storage unit of the present invention. The main body 1 is provided, on a bottom face side thereof, as shown in FIG. 13, with a door 45 freely openable and closable so as to cover the inserted memory card 41, and is designed so that the memory card 41 can be inserted into a memory card insertion port 46 of the main body 1 when the door 45 is opened. The main body 1 is also disposed with a contact 44 which outputs a signal when the door 45 is closed and which is connected so that the output signal may be transmitted to the control unit 43.

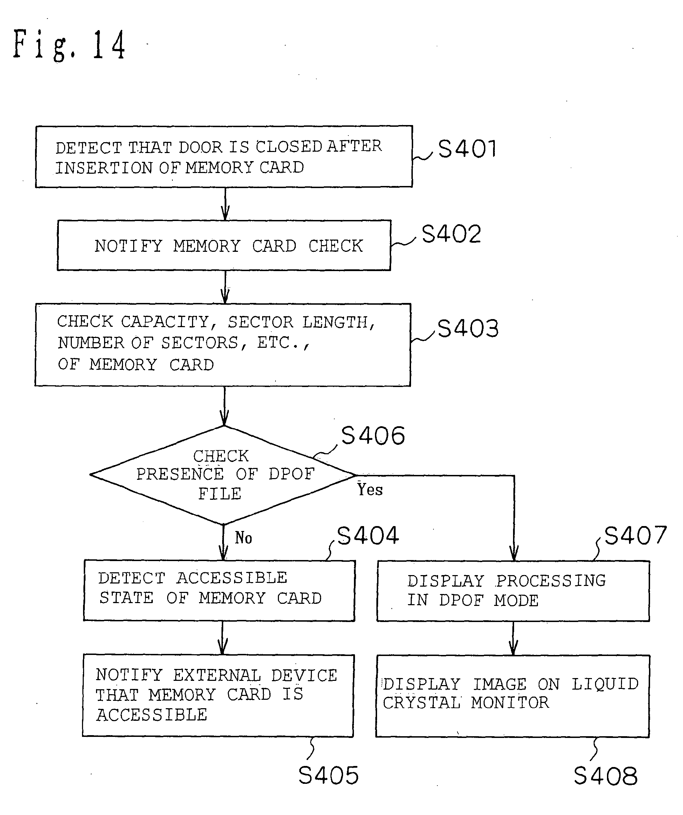

An operation of the DSC having the above constitution in this embodiment will be described referring to FIG. 14. After inserting the memory card 41 into the memory card insertion port 46 of the main body 1, a user closes the door 45, whereupon a contact signal is transmitted from the contact 44 to the control unit 43. Upon detection of the contact signal outputted when the memory card 41 is properly inserted into the memory card insertion port 46 and then the door 45 is closed (step S401), the control unit 43 starts checking the inserted memory card 41 (step S402). Then the control unit 43 ascertains the total storage capacity, sector length, the number of sectors, and the like, of the memory card 41 (step S403).

In this checking processing of the memory card 41, the control unit 43 also ascertains whether the memory card 41 has the DPOF files (step S406). When detecting that there exist the DPOF files, the control unit 43 carries out display processing in the DPOF mode (step S407). Then the control unit 43 provides image data subj ected to the display processing on the liquid crystal monitor 16 (step S408), and transmits the image data to the printer 2.

When the DPOF files are not present in the memory card 41, the control unit 43 detects an accessible state of the memory card 41 (step S404), and notifies the connected external device such as the printer 2 that the memory card 41 is accessible (step S405).

According to the operations described above, an access to the memory card 41 is initiated only when the door 45 is closed, which preventing troubles such that communication with the external device such as the printer 2 is started with the door 45 opened and therefore communication interruption occurs because the memory card 41 is mistakenly removed during the communication.

Note here that the contact of the present invention is illustrated as an a-contact in FIG. 12, while it may alternatively be a b-contact or any contact if it has a constitution of outputting the contact signal when the door 45 is closed, where the same effects as in the aforementioned constitution can be obtained.

Also, it is described that the contact of the present invention outputs the contact signal in response to opening and closing operations of the door 45, however, it may output the contact signal in response to other operations. For example, there is a conceivable constitution in which the main body 1 is provided, on the bottom surface thereof, with a button projecting therefrom so that, when the main body 1 is stably placed on a plane such as a desk, the button may be pressed in under the weight of the main body 1 leading to the output of the contact signal. Furthermore, it is also allowable that the memory card insertion port 46 is provided with a locking mechanism having a contact in order to prevent the memory card 41 from escaping from the memory card insertion port 46 when the memory card 41 is inserted therein so that the contact signal may be outputted from the contact in response to a locking operation for the memory card 41.

In the DSC according to this embodiment, the control unit 43 starts accessing the memory card 41 conditionally on the closing operation of the door 45, and this does not mean that the communication with the external device is interrupted in response to the opening operation of the door 45 after it is once closed and the communication is thereby initiated.

Furthermore, the control unit 43 may comprise, with reference to the configuration in FIG. 6, a media control part 306, a system control part 309, a communication processing part 308, an I/O control part 305, and the like, for example.

### (Fifth Embodiment)

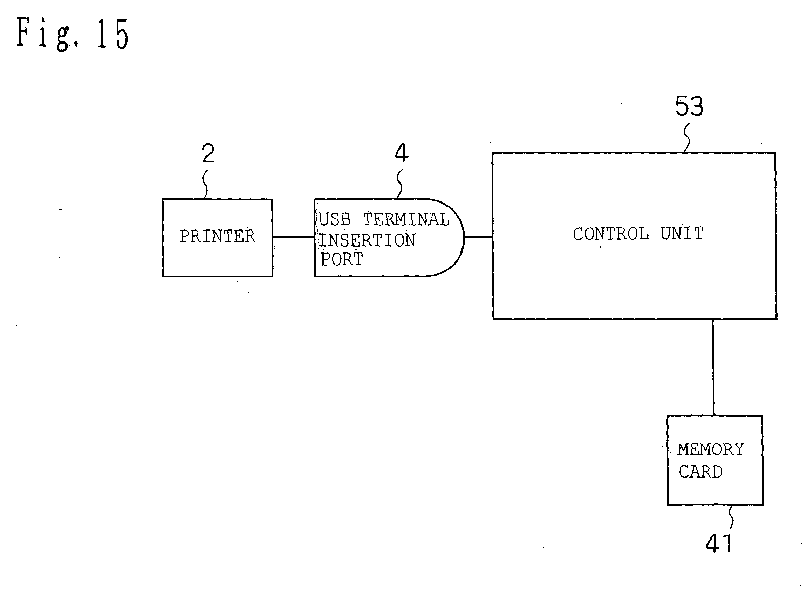

FIG. 15 is a block diagram showing a constitution of the DSC according to a fifth embodiment. In this embodiment, like reference numerals are used to indicate the same components as those in the first to fourth embodiments, and the descriptions thereof will be omitted.

The DSC in this embodiment has a control unit 53 which is one example of fifth controller of the present invention, and has a memory card 41 connected to the control unit 53. The control unit 53 is connected to the printer 2 which is one example of the external device of the present invention. Like reference numerals are used to indicate the same components as those in the first to fourth embodiments, and the descriptions thereof will be omitted.

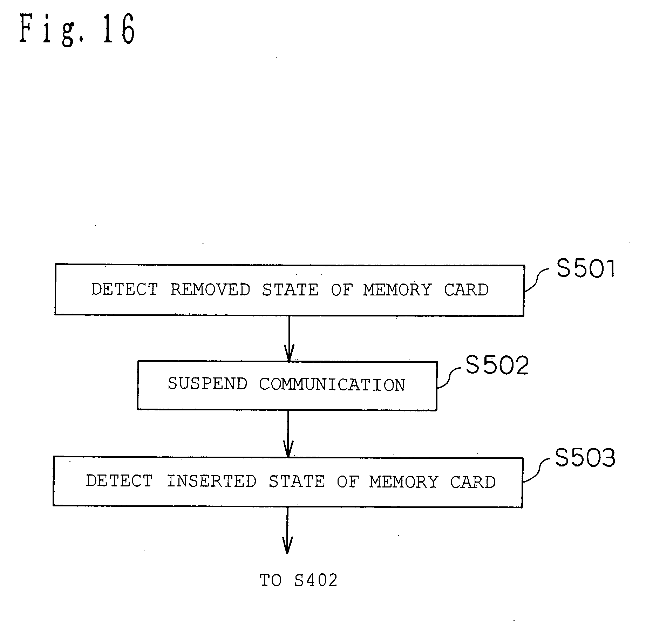

Next, the operation of the DSC having the above constitution will be described with reference to FIG. 16. When a user exchanges the memory card 41 to another memory card 41 in the middle of transmission of image data recorded in the memory card 41 to the printer 2, the control unit 53 detects a removed state of the memory card 41 (step S501), and suspends the communication with the printer 2 (step S502). At this time, the printer 2 prints out image data for which the communication has completed and erases image data for which the communication has not completed.

When the other memory card 41 is inserted by the user, the control unit 53 detects an inserted state of the other memory card 41 (step S503), and shifts to step S401 and its subsequent operations in FIG. 14.

Through the above operations, even when a user exchanges the memory card 41 during communication, printing is started again properly without the need of re-connecting the USB cable 3.

When it is confirmed that DPOF files exist in the other memory card 41 (step S406), the display processing is carried out in the DPOF mode (step S407), and image data to be printed in the DPOF mode as well as the number of sheets to be printed out, printing orders, and other information related to the printing are displayed on the liquid crystal monitor 16.

Also, the external device of the present invention is the printer 2 according to the above description, however, it may alternatively be a personal computer, a portable telephone, or the like. In this case, the control unit 53 does not carry out the DPOF file-related operations (step S406 and thereafter).

Furthermore, the above description is about the operations in the case where the inserted memory card 41 is exchanged to another memory card 41 during communication, whereas when the main body 1, which the memory card is not inserted into, establishes connection with the printer 2, and thereafter the memory card 41 is inserted into the memory card insertion port 46 of the main body 1, the control unit 53 shifts to the operation in step S402 in the fourth embodiment after detecting the inserted state of the memory card 41. In this case, the communication may be initiated after it is determined that the door 45 is closed (step S401) upon the detection of the inserted state of the memory card 41.

The control unit 53 may comprise, with reference to FIG. 6, the media control part 306, the system control part 309, the communication processing part 308, and the like, for example.

### (Sixth Embodiment)

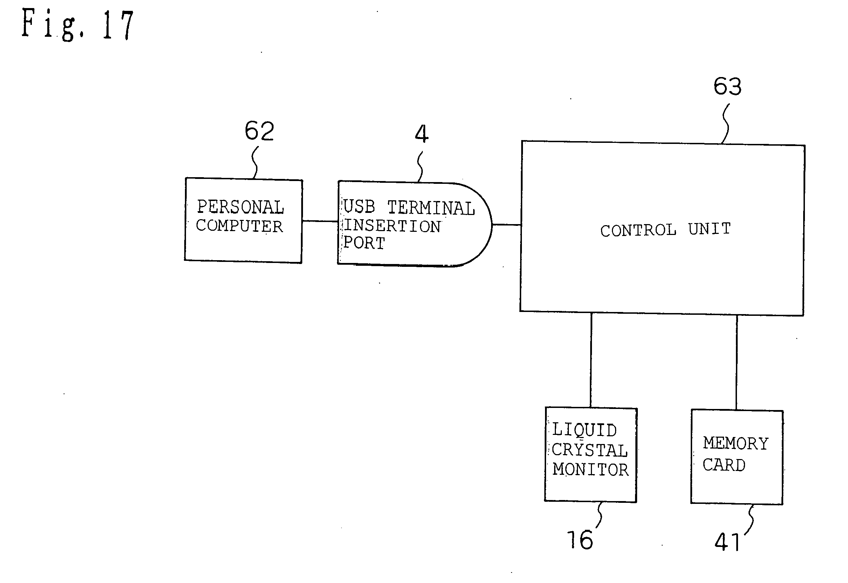

FIG. 17 shows a constitution of the DSC according to a sixth embodiment. In this embodiment, the same reference numerals are allocated to the same component as those in the first to fifth embodiments, and the descriptions thereof will be omitted.

The DSC in this embodiment has a control unit 63 which is an example of controller of the present invention, and the liquid crystal monitor 16 and the memory card 41 connected to the control unit 63. The control unit 63 is connected to a personal computer 62 via the USB terminal insertion port 4.

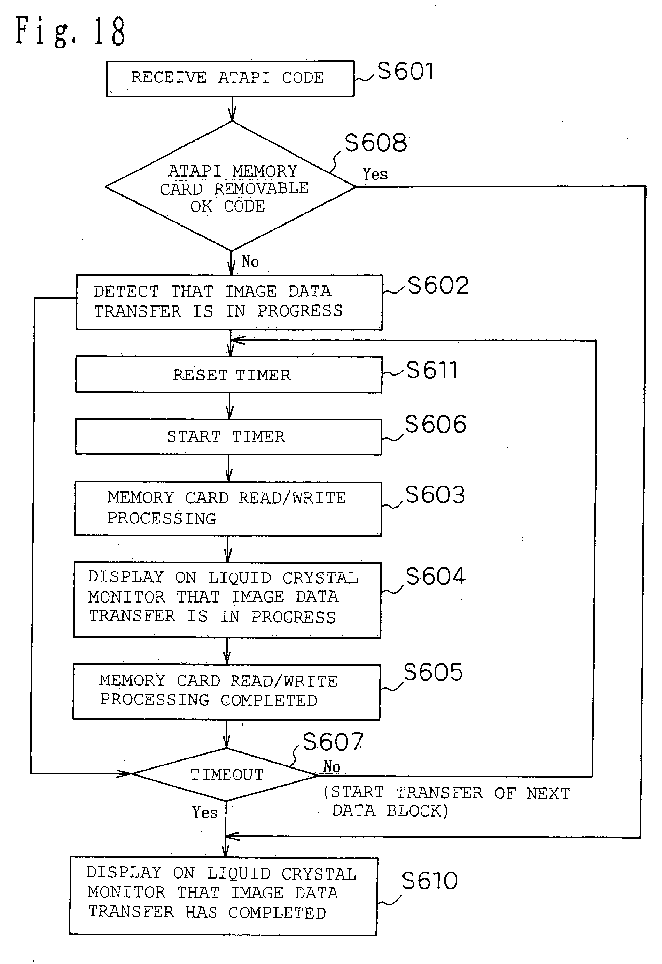

Next, an operation of the DSC in this embodiment will be described with reference to FIG. 18. When the main body 1 is connected to the personal computer 62 via the USB terminal insertion port 4, the control unit 63 receives the ATAPI code (step S601). At this time, the control unit 63 determines whether receiving an ATAPI memory card removable OK code (step S608). When the OK code is not received, data blocks of image data starts to be transferred from the personal computer 62 and thus the control unit 63 detects that the image data is being transferred (step S602). Contrary to this, when the OK code is received, the control unit 63 provides on the liquid crystal monitor 16 an indication that the image data transfer has completed (step S610).

Simultaneously with the detection of image data transfer in progress, the control unit 63 resets a timer which is set to a predetermined operation time period (step S611) and then activates the timer (step S606). This operation time period of the timer is set longer than the longest time period from the completion of transfer of one data block until the start of transfer of the next data block, which is 10 to 20 seconds, for example.

The control unit 63 executes processing for writing the image data transferred from the personal computer 62 into the memory card 41 (step S603). While the time is being activated, the control unit 63 continues to provide on liquid crystal display 16 an indication that the image data transfer is still in progress (step S604).

When the writing processing to the memory card 41 has completed (step S605) and also the operation time period of the timer has elapsed (step S607), the control unit 63 provides on the liquid crystal monitor 16 an indication that the image data transfer has completed (step S610).

While when the data block transfer is started before the operation time period of the timer elapses, the timer is reset (step S611) and the timer is activated again (step S606).

Through the above operations, according to the DSC in this embodiment, the liquid crystal monitor 16 continuously displays that the data transfer is in progress while data is being transferred, which eliminates a risk such that a user mistakenly disconnects the communication with a personal computer during the transfer of image data.

The above description has dealt with the case where the completion of image data transfer is detected under AND conditions between the termination of operation of the timer and the termination of writing processing for the memory card 41, however, it may be detected under either one of the conditions. Even in this case, the risk of disconnecting the communication with the personal computer 62 during the image data transfer can be reduced.

According to the above description, the operation time period of the timer is from the completion of transfer of one block data until the start of transfer of the next data block, however, it may be a time required for an FAT writing operation. In this case, the same effects can be obtained as in the aforementioned case.

Furthermore, while the above description has dealt with the case where the image data is transferred from the personal computer 62 to the DSC, the opposite case is also conceivable, in which the image data is transferred from the DSC to the personal computer 62. In this case, the completion of reading processing for the memory card 41 may be detected in step S605, and the operation time period of the timer may be set to several seconds.

In this embodiment, even when techniques other than the above are employed, a constitution in which image data is transferred by the discretely timed block data and an indication that the image data transfer is in progress is continuously provided on the liquid crystal display 16 from the start to completion of transfer of the image data, is included within a scope of the present invention.

In all the embodiments described so far, the connection unit of the present invention is the USB terminal insertion port 4 for the USB cable 3, however, other types of cables may be available to the terminal insertion port. Also, the connection unit is not necessarily be the terminal insertion port and any type of connection unit is allowable if it is connectable with a cable.

In the embodiments described above, the display unit of the present invention is not limited to the liquid crystal monitor 16, and it may alternatively be other types of monitors such as an EL monitor.

Furthermore, in the aforementioned embodiments, it is conceivable that the external device of the present invention is connected in a wireless manner, not in a cabled manner. In this case, the connection unit of the present invention may have a constitution of detecting a connection state of the external device by receiving a signal indicating that the connection is established with the external device.

Moreover, the portable storage unit of the present invention is not limited to the memory card 41, and any type of storage unit is available.

Moreover, in the embodiments described so far, a program according to the present invention makes a computer execute a part or all of the functions of the first, second, third, fourth, fifth, and sixth controller in the above-mentioned DSC of the present invention, and is operable in cooperation with the computer.

Also, a medium according to the present invention is the one having stored therein a program making a computer execute a part or all of the functions of the first, second, third, fourth, fifth, and sixth controller in the above-mentioned DSC of the present invention, and is readable by the computer as well as utilized when the program read by the computer operates in cooperation with the computer.

As one utilization form of the program of the present invention, it is also allowable that the program is recorded onto a computer-readable recording medium so that the program may operate in cooperation with the computer.

As another utilization form of the program in the present invention, it is also allowable that the program is transmitted through a transmission medium so that the program may operate in cooperation with the computer.

The recording medium includes a ROM and the like, and the transmission medium includes the Internet and the like, and light, radio wave, sound wave.

The computer of the present invention described above is not limited to simple hardware such as a CPU, and may include firmware, an operating system, and peripheral devices.

It is to be understood that, as described above, the constitution of the present invention may be implemented on a software basis or hardware basis.

According to a digital still camera, and a control method and program of the same in the present invention, the operability of a digital still camera when connected to an external device is enhanced, therefore the present invention is useful for the digital still camera, and the like.

### Special Embodiments

1. A digital still camera comprising:
   connection unit establishing connection with an external device;
   connection detection unit detecting that the connection unit is connected to the external device and that the connection is released;
   an electronic viewfinder allowing a user to view therethrough images to be recorded or already recorded images;
   a display device allowing the images to be recorded or the already recorded images to be observed from outside; and
   first controller having a plurality of modes including a transfer mode, the first controller shifting to the transfer mode and transmitting Image data to the external device when the connection detection unit detects the connection, as well as controlling so that display of the image data is switched from the electronic viewfinder to the display device.
2. The digital still camera according to embodiment 1, wherein the connection with the external device is established via a USB cable.
3. The digital still camera according to embodiment 1, wherein the external device includes a printer.
4. A program for operating a computer as the first controller of the digital still camera according to embodiment 1.
5. A digital still camera comprising:
   a display device operable to display image data or textual information; connection unit establishing connection with an external device;
   external device distinction unit distinguishing a type of the external device connected to the connection unit; and
   second controller, in accordance with the type of the external device distinguished by the external device distinction unit, providing on the display device an indication that the connection is established with the distinguished external device and an indication for inputting data required in a communication with the distinguished external device.
6. The digital still camera according to embodiment 5, wherein the external device distinction unit distinguishes the type of the external device connected to the connection unit by distinguishing a device code transmitted from the external device.
7. The digital still camera according to embodiment 6, wherein
   the external device distinction unit distinguishes between a printer and a personal computer which are the external device connected to the connection unit, and the second controller shifts to a mode for transmitting image data to the printer when the external device distinction unit receives a printer code, and shifts to a mode for transmitting image data to the personal computer when the external device distinction unit receives a code indicating the personal computer.
8. The digital still camera according to embodiment 6, wherein, when the external device distinction unit does not receive the device code while the connection unit is being connected to the external device, the second controller shifts to a mode for changing infernal setting parameters.
9. A program for operating a computer as the second controller of the digital still camera according to embodiment 5.
10. A digital still camera comprising:
   connection unit establishing connection with an external device;
   storage unit storing recorded images or information related to the recorded images; display device operable to display the recorded images or textual information; and
   third controller having a batch print mode for collectively transmitting at least a part of the recorded images to a printer connected to the connection unit so that the printer prints the transmitted images, wherein
   in accordance with individual image print start Information or error information transmitted from the printer, the third controller retrieves an image corresponding to the individual image print start information or error information or the information related to the image from the storage unit to thereby display on the display device.
11. The digital still camera according to embodiment 10, wherein the information related to the image indicates a printing progress state of the printer.
12. A program for operating a computer as the third controller of the digital still camera according to embodiment 10.
13. A digital still camera comprising:
   a main body;
   a display device operable to display textual Information or image data; sixth controller, when Image data is transferred by transmission of a plurality of discretely timed data blocks from a connected personal computer or when image data is transferred by transmission of a plurality of discretely timed data blocks to a connected personal computer, providing continuously from start to completion of the image data transfer on the display device, an indication that the image data transfer is in progress.
14. The digital still camera according to embodiment 13, wherein
   the main body is removably attachable with portable storage unit, and the sixth controller determines the completion of image data transfer on condition that next data block is not transferred for a predetermined period of time since one data block transfer has completed or that a signal indicating permission to detach the portable storage unit from the main body is received from the personal computer.
15. The digital still camera according to embodiment 14, wherein the sixth controller does not determine the completion of the image data transfer, while each data block is being transferred or the portable storage unit for storing image data or textual information is being accessed.
16. A method of controlling a digital still camera comprising;
   a connection detecting step of detecting that connection unit establishing connection with an external device is connected to the external device or that the connection is released;
   a step of shifting from a plurality of modes to a transfer mode when the connection is detected in the connection detecting step;
   a step of transmitting Image data to the external device after the shift to the transfer mode; and a step of transmitting the image data and simultaneously effecting control such that display of the Image data is switched from an electronic viewfinder to a display device, the electronic viewfinder allowing a user to view therethrough images to be recorded or already recorded images, the display device allowing the images to be recorded or the already recorded images to be observed from outside.

## Claims

1. A digital camera comprising: a connection unit configured to establish a connection with a printer; a connection detection unit configured to detect that the connection unit is connected to the printer and that the connection of the connection unit to the printer is released; an electronic viewfinder through which an image, which is to be recorded or which has already been recorded, can be viewed by a user; a display device configured to display the image which is to be recorded or which has already been recorded, a mode selector configured to enable the user to select among a plurality of modes; and a controller configured to switch among the plurality of modes responsive to the mode selector, automatically switch from one of the plurality of modes to a transfer mode when the connection detection unit detects that the connection unit is connected to the printer, and automatically switch from the transfer mode to the mode selected by the mode selector when the connection detection unit detects that the connection of the connection unit to the printer is released; the transfer mode enabling transmission of image data to the printer and causing the controller to automatically switch display for confirming images to be transmitted from the electronic viewfinder to the display device.

2. The digital camera according to claim 1, wherein the plurality of modes include a record mode and a playback mode.

3. The digital camera according to claim 1, wherein the mode selector is configured to enable the user to previously select, among a plurality of modes in the transfer mode, the mode to be used after the connection detection unit detects that the connection of the connection unit to the printer is released.
